# EUROPÄISCHE PATENTSCHRIFT

(11) **EP 1 032 867 B1**
(45) Veröffentlichungstag und Bekanntmachung des Hinweises auf die Patenterteilung: **26.03.2003**
(21) Anmeldenummer: 98965688.9
(22) Anmeldetag: 21.11.1998
(51) Int. Cl.: G05B 19/416, H02P 7/00, H02P 1/16, H02P 3/06, D03D 51/00

(54) **VERFAHREN UND ANTRIEB ZUM DREHMOMENTGESTEURETEN ANTREIBEN EINER MASCHINE**
PROCESS AND DRIVE FOR TORQUE-CONTROLLED DRIVING OF A MACHINE
PROCEDE ET SYSTEME D'ENTRAINEMENT POUR l'ENTRAINEMENT UNE MACHINE COMMANDE PAR COUPLE

(30) Priorität: 21.11.1997 BE 9700936
(43) Veröffentlichungstag der Anmeldung: 06.09.2000
(73) Patentinhaber: Picanol N.V., 8900 Ieper (BE)
(72) Erfinder: BILCKE, Walter, B-8980 Geluveld (BE)
(74) Vertreter: Patentanwälte Ruff, Wilhelm, Beier, Dauster & Partner
(86) Internationale Anmeldenummer: EP9807511
(87) Internationale Veröffentlichungsnummer: WO99027426

(56) Entgegenhaltungen:
- EP-A- 0 198 248
- EP-A- 0 802 270
- WO-A-86/03075
- US-A- 3 836 833
- US-A- 4 364 002
- US-A- 4 755 123
- US-A- 4 868 477
- US-A- 5 545 964
- US-A- 5 755 267

## Beschreibung

Die Erfindung betrifft ein Verfahren zum Antreiben einer Maschine, die wenigstens ein eine periodische Bewegung ausführendes Bauteil und einen elektrischen Antriebsmotor enthält, und einen Antrieb für eine derartige Maschine.

Im Sinne der vorliegenden Erfindung wird unter einer Maschine, die wenigstens ein eine periodische Bewegung ausführendes Bauteil enthält, verstanden, daß dieses Bauteil keine kontinuierliche, gleichbleibende und beispielsweise umlaufende Bewegung ausführt. Beispielsweise gibt es bei einer Webmaschine mehrere derartiger Bauteile, die eine periodische Bewegung ausführen. Das ist beispielsweise die Weblade, die zu bestimmten Zeitpunkten hin- und hergeschwenkt wird. Ferner sind das die Fachbildungsmittel, die zu bestimmten Zeitpunkten nach oben und nach unten bewegt werden. Bei Greiferwebmaschinen gehören zu diesen eine periodische Bewegung ausführenden Bauteilen auch noch die Greifer und ihre Antriebselemente, die die Greifer zu bestimmten Zeitpunkten hin- und herbewegen. Wenn mehrere periodische Bewegungen ausführende Bauteile vorhanden sind, so ergibt sich eine sich wiederholende Gesamtperiode. Bei Webmaschinen wird diese Periode von der Anzahl an Webzyklen eines Webmusters bestimmt. Danach wiederholt sich die Bindung von Schuß- und Kettfäden, die insgesamt nach einem, sich wiederholenden Muster erfolgt.

Wenn eine derartige Maschine, beispielsweise eine Webmaschine, mittels eines Asynchronmotors angetrieben wird, der an ein Stromnetz angeschlossen ist, so wird der Asychronmotor sehr stark belastet. Er arbeitet auch dann mit einem schlechten energetischen Wirkungsgrad. Dieser schlechte energetische Wirkungsgrad ist vor allem dadurch zu erklären, daß sich die Drehzahl der Antriebwelle einer solchen Webmaschine und damit die Drehzahl des Antriebsmotors stark verändern. Bei gegenüber einer Nenndrehzahl von verringerter und/oder erhöhter Drehzahl zieht der Antriebsmotor große Ströme. Diese großen Ströme implizieren große Energieverluste, durch die Wärmeentwicklung des Antriebsmotors und tragen nur uneffektiv dazu bei, daß der Antriebsmotor ein Moment liefert, das erforderlich ist, um die Drehzahl der Webmaschine konstant zu halten.

Um diese Nachteile zu verringern, ist es bekannt, auf der Antriebswelle einer solchen Webmaschine ein Schwungrad anzuordnen. Durch dieses Schwungrad wird der Wirkungsgrad eines als Antriebsmotor dienenden Asynchronmotors wesentlich verbessert. Zwischen dem Schwungrad und der Webmaschine werden jedoch große Momente ausgetauscht, die die Webmaschine stark belasten und Ursache für Verschleiß sind. Dabei sind nicht nur hohe Werte der Momente nachteilig, sondern auch große Unterschiede in den Momenten.

Wenn eine Kupplung zwischen dem Schwungrad und der Webmaschine vorgesehen ist, kann die kenetische Energie des Schwungrades dazu ausgenutzt werden, die Webmaschine schnell anlaufen zu lassen. Dies hat jedoch den Nachteil, daß die Kupplung sehr große Drehmomente aufnehmen muß. Ein weiterer Nachteil besteht darin, daß die Webmaschine nach dem Anlaufen relativ schnell eine Drehzahl erreicht, die nur ein Prozentsatz der Betriebsdrehzahl ist, beispielsweise 80%. Aufgrund des Trägheitsmomentes des Schwungrades wird danach jedoch die Betriebsdrehzahl relativ spät erreicht. Darüber hinaus ist der schnell erreichbare Prozentsatz der Betriebsdrehzahl abhängig von Umgebungseinflüssen, beispielsweise der Temperatur der Webmaschine, der Höhe der Netzspannung, der Feuchtigkeit des Webraumes, der Stillstandszeit der Webmaschine u.a. Dies ist vor allem bei Webmaschinen nachteilig, da damit die Qualität des Gewebes verschlechtert wird.

Es ist auch bei Webmaschinen bekannt, die Drehzahl des Schwungrades vor dem Starten der Webmaschine in Relation zur Betriebsdrehzahl zu erhöhen, um nach dem Starten schnell einen hohen Prozentsatz der Betriebsdrehzahl zu erreichen. Die tatsächlich erreichte Drehzahl bleibt jedoch abhängig von den vorstehend erwähnten Umgebungseinflüssen, so daß auch hier die Qualität des Gewebes beeinträchtigt wird.

Der Erfindung liegt die Aufgabe zugrunde einen Antrieb für eine Maschine der eingangs genannten Art zu schaffen, der mit gutem energetischen Wirkungsgrad arbeitet, d.h. nur mit geringen Energieverlusten.

Diese Aufgabe wird durch die Kennzeinchnenden Merkmale des Anspruchs 1 bzw. des Anspruchs 10 gelöst.

Durch die Steuerung des abgegebenen Drehmomentes läßt sich erreichen, daß der Antriebsmotor nicht mit erhöhter Kraft oder Leistung gegen die Wirkung des Trägheitsmomentes der Maschine arbeitet, d.h. nicht als Bremse wirkt, wenn das Trägheitsmoment zu einer Geschwindigkeitserhöhung der Maschine tendiert und auch nicht mit einem erhöhten Drehmoment reagiert, wenn das Trägheitsmoment zu einer Geschwindigkeitsreduzierung tendiert. Der Antriebsmotor wird mithin so gesteuert, daß er dem Drehzahlverhalten der Maschine folgt, das sich aufgrund des Trägheitsmomentes der Maschine ergibt. Wenn das Trägheitsmoment der Maschine zu einer Geschwindigkeitsreduzierung führt, so macht der Antriebsmotor das ebenso mit, wie wenn das Trägheitsmoment zu einer Erhöhung der Maschinengeschwindigkeit führt. Die Schwankungen der Geschwindigkeit der Maschine werden dadurch etwas größer, was jedoch in der Regel nicht stören wird. Insbesondere bei Webmaschinen führt eine größere Geschwindigkeitsschwankung während einer Periode oder während eines Webzyklus nicht zu Störungen.

Die Erfindung bietet den Vorteil, daß das Drehmoment, das der Antriebsmotor liefert, vorab festgelegt und so gewählt werden kann, daß die Energieverluste in dem Antriebsmotor beschränkt sind, und daß die Belastung und/oder die Belastungsdifferenz in der Antriebswelle der Maschine und/oder in der Motorwelle ebenfalls reduziert sind. Das Drehmoment des Antriebsmotors wird dabei bevorzugt in der Weise vorbestimmt, daß es immer positiv ist, so daß der Antriebsmotor immer Energie an die Maschine abgeben kann. Aufgrunddessen ist es auch nicht notwendig, einen Antriebsmotor zu verwenden, der über eine längere Zeit eine hohe Leistung liefern kann, so daß ein relativ preisgünstiger Antriebsmotor mit relativ kleinen Abmessungen verwendet werden kann, der darüber hinaus mit einem guten energetischen Wirkungsgrad arbeitet. Dabei wird davon ausgegangen, daß der Antriebsmotor nicht stark beansprucht werden muß, um eine nur annähernd konstant bleibende Drehgeschwindigkeit der Maschine zu erreichen. Da eine Änderung der Drehgeschwindigkeit der Maschine zugelassen wird, ist es nicht notwendig, daß der Antriebsmotor zu bestimmten Zeitpunkten hohe Leistungen erbringen muß, um die Drehgeschwindigkeit konstant zu halten. Der Versuch, die Drehgeschwindigkeit konstant zu halten, führt zu dem Nachteil, daß ein teurer Antriebsmotor mit großer Leistung erforderlich ist, um kurzzeitig diese hohe Leistung zu liefern. Diese große Leistung wäre viel größer als die im Durchschnitt von dem Antriebsmotor zu erbringende Leistung, was dann nur zu Energieverlusten durch Wärmeentwicklung und damit zu einem schlechten energetischen Wirkungsgrad des Antriebsmotors führen würde.

In weiterer Ausgestaltung der Erfindung wird vorgesehen, daß für den Antriebsmotor Steuerdaten abrufbar abgespeichert werden, mittels denen der Antriebsmotor bei jeder Drehzahl mit einer Mehrzahl von unterschiedlichen Drehmomenten betreibbar ist, daß die Ist-Drehzahl des Antriebsmotors gemessen wird, und daß Steuerdaten abgerufen werden, mit denen der Antriebsmotor bei der Istdrehzahl ein vorgegebenes Drehmoment liefert. Bei einer einfachen Lösung wird dabei vorgesehen, daß das zu liefernde Drehmoment als konstanter Wert vorgeben wird.

Bei einer anderen Ausführungsform wird vorgesehen, daß das von dem Antriebsmotor zu liefernde Drehmoment als Verlauf über die Winkelposition des Antriebsmotors abgespeichert wird, daß die Ist-Winkelposition des Antriebsmotors erfaßt wird, und daß der zu der Ist-Winkelposition aus dem Speicher ausgelesene Wert des Drehmomentes als zu lieferndes Drehmoment vorgegeben wird. Auf diese Weise ist es möglich, den Verlauf des gelieferten Drehmomentes an den Verlauf des Trägheitsmomentes anzupassen.

Insbesondere bei Webmaschinen ist es vorteilhaft, mehrere Verläufe von zu liefernden Drehmomenten über der Winkelposition des Antriebsmotor abzuspeichern. In diesem Fall kann der Drehmomentverlauf ausgewählt werden, mit dem die Maschine bei einem bestimmten Material die besten Webergebnisse liefert.

In weiterer Ausgestaltung der Erfindung wird vorgesehen, daß der Verlauf der Drehzahl des Antriebsmotors, dessen Drehmoment gesteuert wird, in Abhängigkeit von der Winkelposition des Antriebsmotors gemessen und abgespeichert wird, und daß die Maschine mittels einer Startschaltung gestartet wird, bei welcher der Antriebsmotor mittels einer Drehzahlregelung auf eine Drehzahl gebracht wird, die zu der jeweils gemessenen Ist-Winkelposition des Antriebsmotors abgespeichert ist. Dies hat den Vorteil, daß der Antriebsmotor derart gestartet werden kann, daß die Maschine schon kurze Zeit nach dem Start einen Verlauf der Drehgeschwindigkeit aufweist, die dem Verlauf der Drehgeschwindigkeit entspricht, den die Maschine hätte, wenn sie nicht angehalten worden wäre. Dabei wird die Maschine bereits kurze Zeit nach dem Start mit einem energetisch guten Wirkungsgrad angetrieben. Da der gesteuerte Verlauf der Drehzahl des Antriebsmotors zu Drehmomenten führt, die im wesentlichen gleich mit den Drehzahlen sind, die der Motor bei einem gesteuerten Verlauf des Drehmomentes hat, arbeitet der Antriebsmotor mit gutem energetischen Wirkungsgrad. Diese Startschaltung ist insbesondere für eine Webmaschine von erheblichem Vorteil. Da praktisch unmittelbar nach dem Start ein Geschwindigkeitsverlauf erreicht wird, der dem Geschwindigkeitsverlauf entspricht, der vor dem Anhalten der Webmaschine gegeben war, wird die Webmaschine praktisch beim Anschlagen des ersten eingetragenen Schußfadens mit einer Geschwindigkeit wie vor dem Anhalten betrieben. Dies ist auch unabhängig von Umgebungseinflüssen. Auf diese Weise können die Schußfäden nach dem Start der Webmaschine in der gleichen Weise eingewebt werden, wie dies vor dem Anhalten der Webmaschine der Fall war. Dies hat zur Folge, daß für die Gewebqualität nachteilige Ansatzstreifen im Gewebe weitgehend vermieden werden können. Darüber hinaus wird dies auch erreicht, wenn die Temperatur der Webmaschine oder andere Umgebungseinflüsse beim Start gegenüber den vorher bestehenden Temperaturen und Umgebungseinflüssen verändert sind.

In weiterer Ausgestaltung der Erfindung wird vorgesehen, daß die Maschine mittels einer Abschaltschaltung abgeschaltet wird, bei welcher der Antriebsmotor auf Drehzahlen abgebremst wird, die vorgegebenen Winkelpositionen zugeordnet sind, und daß der Antriebsmotor in einer vorgegebenen Winkelposition zum Stillstand kommt. Letzteres ist inbesondere auch bei Webmaschinen von Vorteil, insbesondere wenn ein Schußfadenbruch o.dgl. behoben werden soll.

Weitere Merkmale und Vorteile der Erfindung ergeben sich aus der nachfolgenden Beschreibung der in der Zeichnung dargestellten Ausführungsbeispiele.
- Fig. 1: zeigt in schematischer Darstellung einen Antrieb für eine Webmaschine, der erfindungsgemäß gesteuert wird,
- Fig. 2: eine Tabelle mit abgespeicherten Werten für die Drehzahl des Antriebsmotors und Werten für ein von dem Antriebsmotor abzugebendes Drehmoment mit zugehörigen Werten für Amplitude und Frequenz eines Speisestroms,
- Fig. 3: eine Tabelle mit Werten für die Winkelstellung des Antriebsmotors und Werten für die zu diesen Winkelpositionen zu liefernden Drehmomenten,
- Fig. 4: eine Tabelle mit Werten für die Winkelstellung des Antriebsmotors und mehreren Spalten, in denen Verläufe und/oder konstante Werte für zu diesen Winkelpositionen abzugebende Drehmomente angegeben sind,
- Fig. 5: eine Tabelle mit Werten für die Winkelstellung des Antriebsmotors und Werten für die zugehörige Drehzahl,
- Fig. 6: eine Tabelle mit Winkelstellungen des Antriebsmotors und mehreren Spalten mit zueinander proportionalen Werten für das vom Antriebsmotor abzugebende Drehmoment,
- Fig. 7: eine Tabelle mit Werten für die Winkelstellung des Antriebsmotors und zugeordneten Werten für die Drehzahl und Werten für Drehzahlen für den Start,
- Fig. 8: eine Tabelle mit Werten für die Winkelstellung des Antriebsmotors und Werten für das vom Antriebsmotor beim Starten abgegebene Drehmoment, den entsprechenden Drehzahlen sowie Produkten von Werten und Summen dieser Produkte,
- Fig. 9: eine Tabelle mit Werten für die Winkelstellung des Antriebsmotors, Werten für die zugehörigen Drehzahlen und Drehzahlwerte für ein Anhalten und
- Fig. 10: eine schematische Darstellung eines Antriebes für eine erfindungsgemäß Steuerung.

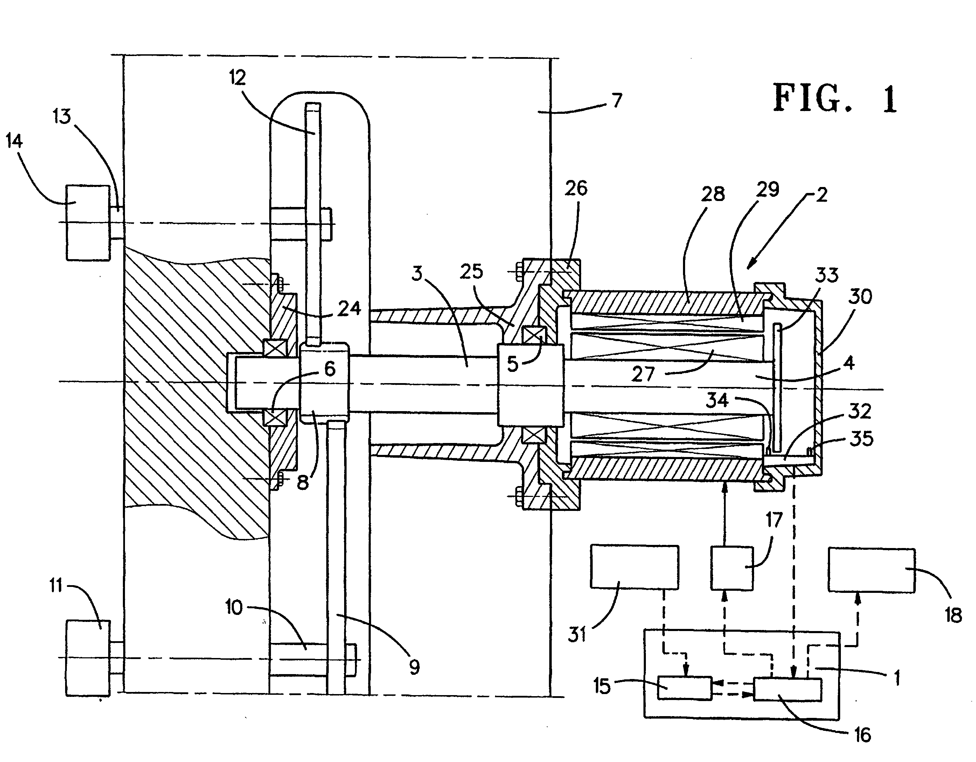

Der in Fig. 1 dargestellte Antrieb für eine Webmaschine enthält einen mittels einer Steuereinheit 1 gesteuerten Antriebsmotor 2, der die Hauptantriebswelle 3 der Webmaschine antreibt. Die Motorwelle 4 und die Hauptantriebswelle 3 sind bei diesem Ausführungsbeispiel einteilig ausgebildet. Die Hauptantriebswelle 3 ist mittels Lagern 5, 6 in einem Rahmen 7 der Webmaschine gelagert.

Auf der Hauptantriebswelle 3 ist drehfest ein Schaltrad 8 angeordnet. Das Schaltrad 8 kämmt mit einem Antriebszahnrad 9, das drehfest mit einer Antriebswelle 10 verbunden ist, die erste Antriebselemente 11 antreibt, beispeilsweise Fachantriebselemente. Das Schaltrad 8 kann außerdem mit einem Antriebszahnrad 12 kämmen, das drehfest auf einer Antriebswelle 13 für zweite Antriebselemente 14 angeordnet ist, die beispielsweise die Antriebselemente für die Weblade und bei Greiferwebmaschinen Greiferantriebselemente sind. Die Hauptantriebswelle 3 und die Antriebswellen 10, 13 verlaufen parallel zueinander. Während eines Webvorganges treibt die Hauptantriebswelle 3 über das Schaltrad 8 beide Zahnräder 9 und 12 und die mit diesen verbundenen Antriebselemente 11, 14.

Um das an der Hauptantriebswelle 3 wirkende Antriebsdrehmoment zu begrenzen, ist der Durchmesser des Schaltrades 8 kleiner als der Durchmesser der Antriebsräder 9, 12. Das Antriebsrad 12 der Antriebselemente 14 dreht sich pro Schußeintrag einmal. Das Antriebsrad 9 der Antriebselemente 11 dreht sich in der gleichen Zeit beispielsweise nur um eine halbe Umdrehung, da die Fachbildungsmittel bei einem Schußeintrag nur einen halben Zyklus durchlaufen müssen. Zu diesem Zweck ist der Durchmesser des Antriebsrades 9 doppelt so groß wie der Durchmesser des Antriebsrades 12.

Das Lager 6 ist zwischen dem Webmaschinenrahmen 7 und einem mit Schrauben daran befestigten Flansch 24 angeordnet. Das Lager 5 befindet sich zwischen einem Flansch 25, der Teil des Webmaschinenrahmens ist, und einem mit Schrauben daran befestigten Flansch 26. Der Rotor 27 des Antriebsmotors 2 ist drehfest auf der Motorwelle 4 befestigt, die - wie schon gesagt - einteilig mit der Hauptantriebswelle 3 ausgebildet ist. Der in einem Gehäuse 28 angeordnete Stator 29 des Antriebsmotors 2 ist mittels des Flansches 26 an dem Webmaschinenrahmen 7 angebracht. Hierzu ist das Gehäuse 28 mit einem Gewinde versehen, das in ein Gewinde des Flansches 26 eingeschraubt ist. Der Flansch 26 hält den Stator 29 zentrisch zu dem Rotor 27. Der Stator 29 umschließt den Rotor 27. Das Gehäuse 28 weist ein zweites, mit einem Gewinde versehenes Ende auf, auf das ein mit Gewinde versehener Flansch 30 geschraubt ist, der die Stirnseite des Antriebsmotors 2 staubdicht abschließt.

Die Steuereinheit 1 enthält wenigstens einen Speicher 15 und eine Auswerteeinrichtung 16. An die Steuereinheit 1 sind eine Eingabeeinheit 31, eine Anzeigeeinheit 18 und ein Sensor 32 angeschlossen. Der Sensor 32 arbeitet mit einer Encoderscheibe 33 zusammen, die auf der Motorwelle 4 angeordnet ist. Bei einer abgewandelten Ausführungsform sind die Encoderscheibe 33 und der Sensor 32 auf der Hauptantriebswelle 3 der Maschine angebracht. Mittels der Signale des Sensors 32 kann die Steuereinheit 1 die Winkelposition und die Drehzahl der Motorwelle 4 bestimmen. Der Sensor 32 enthält beispielsweise einen Sender 34 für Lichtstrahlen und einen gegenüberliegend angeordneten Empfänger 35, zwischen denen die Encoderscheibe 33 angeordnet ist. Die Encoderscheibe 33 enthält Zähne oder Öffnungen o.dgl., die entscheiden, ob Lichtstrahlen vom Sender 34 zum Empfänger 35 gelangen oder nicht. Selbstverständlich kann auch ein anderer Sensor 32 vorgesehen werden, beispielsweise ein Sensor mit magnetischem, elektromagnetischem oder einem anderen beliebigen Arbeitsprinzip.

Der bezüglich seiner Leistung steuerbare Antriebsmotor 2 wird mittels eines Steuerungssystems 17 von der Steuereinheit 1 gesteuert. Bei bevorzugten Ausführungsformen ist der Antriebsmotor 2 als schaltbarer Reluktanzmotor ausgebildet. Ein derartiger Antriebsmotor 2 ist besonders geeignet, um gemäß der vorliegenden Erfindung während des Betriebes, während des Startens und während des Abschaltens gesteuert zu werden. Das Steuerungssystem 17 ist beispielsweise eine elektronisch geregelte Stromquelle oder Leistungsstufe, die lastunabhängig Strom mit vorwählbarer Amplitude und vorwählbarer Frequenz liefern kann.

Um den Antriebsmotor 2 zu steuern, werden zunächst Steuerdaten für den Antriebsmotor in dem Speicher 15 der Steuereinheit 1 abgelegt. Diese Steuerdaten werden manuell oder elektronisch über die Eingabeinheit 31 in die Steuereinheit 1 angegeben. Die Steuerdaten sind beispielsweise Amplitude A und Frequenz F des Speisestroms für den Antriebsmotor 2.

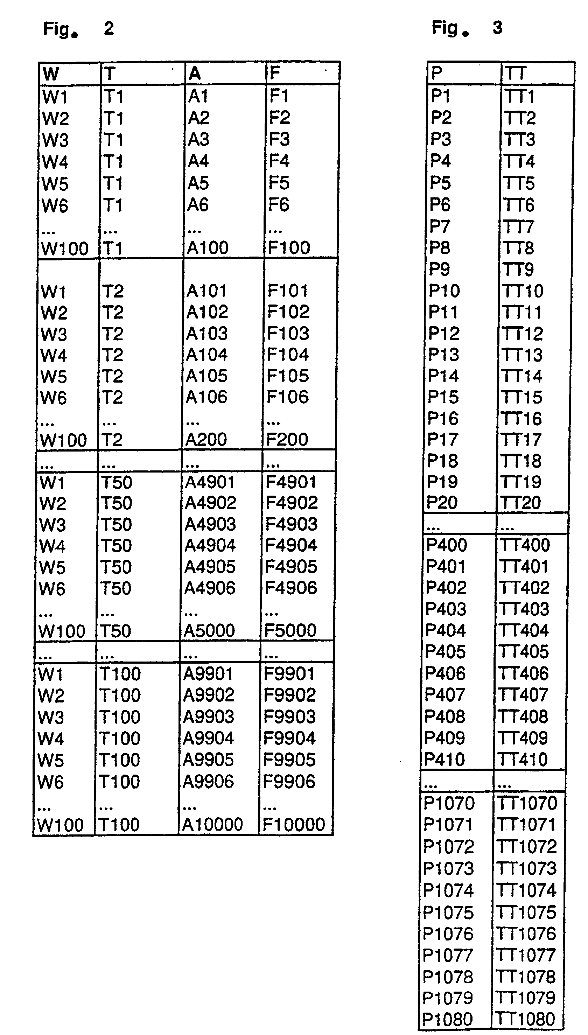

Die Steuerdaten werden beispielsweise mittels bekannter Meßinstrumente erfaßt. Dabei wird für jede Drehzahl, d.h. für jede in dem Arbeitsbereich der Maschine liegende Drehzahl, des Antriebsmotors eine Vielzahl von von dem Motor abgebbaren Drehmomenten angefahren und die hierzu gehörigen Werte des Speisestroms bestimmt. Wie beispielsweise anhand der Tabelle von Fig. 2 erläutert wird, ist die Drehzahl W des Antriebsmotors in hundert Werte von Drehzahlen W 1 bis W 100 unterteilt, die den Arbeitsbereich des Antriebsmotors 2 abdecken. Für jede dieser Drehzahlen W 1 bis W 100 wird die Möglichkeit gegeben, einhundert unterschiedliche Drehmomente zu erzeugen, d.h. Drehmomente von T 1 bis T 100, die über den Arbeitsbereich des Antriebsmotors 2 verteilt sind. Für jede dieser Drehzahlen W 1 bis W 100 und die jeweils zugehörigen Drehmomente T 1 bis T 100 werden die Amplituden A und die zugehörigen Frequenzen F ermittelt, d.h. zehntausend Werte für die Amplitude A 1 bis A 10.000 und zehntausend Werte für die Freuquenz F 1 bis F 10.000, die entsprechend alle abgespeichert werden.

Selbstverständlich können auch Steuerdaten als Werte für die Speisespannung und die Frequenz abgespeichert werden. In diesem Fall besteht dann das Steuerungssystem aus einer elektronisch geregelten Spannungsquelle, die lastunabhängig eine Spannung mit wählbarer Größe und wählbarer Freuquenz liefert.

Unter Benutzung der in der Tabelle nach Fig. 2 dargestellten, abgespeicherten Steuerdaten kann der Antriebsmotor 2 so betrieben werden, daß er ständig ein konstantes Drehmoment an die Maschine abgibt. Das gewünschte, konstante Drehmoment wird mittels der Eingabeeinheit 31 in die Steuereinheit 1 eingegeben. Die Auswerteeinrichtung 16 der Steuereinheit 1 ermittelt anhand der Signale des Sensors 32 die Ist-Drehzahl des Antriebsmotors 2 und gibt diese ebenfalls in Steuereinheit 1 ein. Die Encoderscheibe 33 hat Zähne oder Öffnungen, die in bekanntem Winkelabstand angeordnet sind. Durch Messen der Zeitspanne zwischen zwei aufeinanderfolgenden, von dem Sender 34 zu dem Empfänger 35 gelangenden Lichtstrahlen läßt sich die Drehzahl der Motorwelle 4 berechnen. Darüber hinaus kann mit Hilfe des Sensors 32 die momentane Winkelstellung P des Antriebsmotors erfaßt werden, indem beispielsweise die Anzahl der Signale des Sensors 32 ausgehend von einer bekannten Referenzposition gezählt werden.

Die Auswerteeinrichtung 16 ruft die zu der Ist-Drehzahl zugehörigen, abgespeicherten Steuerdaten auf, mit denen das gewünschte, konstante Drehmoment bei diesen Drehzahlen erzeugbar ist und gibt diese Steuerdaten an das Steuersystem 17. Beispielsweise kann an der Eingabeeinheit 31 eingegeben werden, daß das von dem Antriebsmotor 2 abzugebende Drehmoment den konstanten Wert T 50 haben soll. Wenn beispielsweise dann die Ist-Drehzahl W 6 gemessen wird, so ist aus der Tabelle nach Fig. 2 in der Zeile W 6 und T 50 abzulesen, welche Steuerdaten hierzu abgespeichert sind. Dies sind bei dem Ausführungsbeispiel die Steuerdaten A 4906 für die Stromstärke und F 4906 für die Frequenz. Der Antriebsmotors 2 wird mit diesen Steuerdaten A 4906 und F 4906 versorgt und liefert dann bei der Ist-Drehzahl W 6 das Drehmoment T 50.

Bei einer Maschine mit periodische Bewegungen ausführenden Bauteilen, wie beispielsweise bei Webmaschinen, ändert sich das Trägheitsmoment in der Weise, daß einmal die Maschine schneller wird und dann wieder langsamer wird. Mit der vorstehend beschriebenen Steuerung wird erreicht, daß das von dem Antriebsmotor 2 an die Maschine abgegebene Drehmoment auch bei Änderungen der Ist-Drehzahl des Antriebsmotors 2 konstant bleibt. Mit der erfindungsgemäßen Steuerung wird erreicht, daß die Steuerdaten des Antriebsmotors 2 an die sich ändernde Geschwindigkeit der Maschine angepaßt sind und diesen nicht entgegenwirken, d.h. daß der Antriebsmotor weder versucht, die Maschine zu bremsen noch stärker zu beschleunigen. Da der Antriebsmotor 2 mithin nicht in der Weise wirkt, daß die Geschwindigkeitsschwankungen der Maschine reduziert werden, führt dies dazu, daß die Maschine mit etwas ausgeprägteren Geschwindigkeitsschwankungen arbeitet, nämlich entsprechend dem natürlichen Verlauf des Trägheitsmomentes.

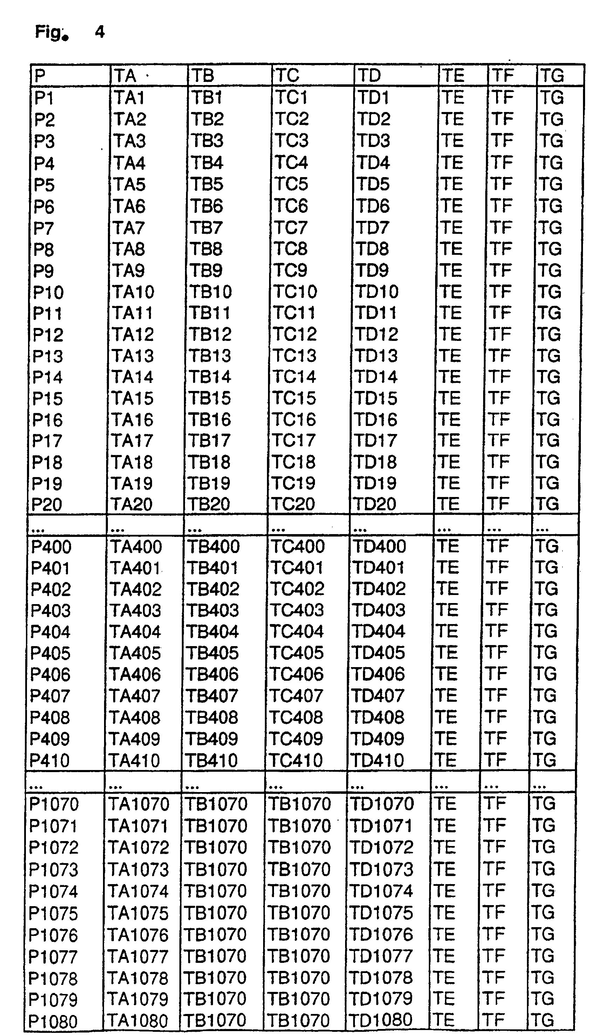

Gemäß einer anderen Möglichkeit zum Bestimmen des von dem Antriebsmotor 2 an die Maschine abgebenen Drehmomentes wird vorgesehen, daß ein periodischer Verlauf für das Drehmoment in Abhängigkeit von der Winkelposition P des Antriebsmotors gespeichert und entsprechend zu dieser Winkelposition abgegeben wird. Der Verlauf des zu liefernden Drehmomentes TT in Abhängigkeit zu der Winkelposition P wird beispielsweise entsprechend der Tabelle nach Fig. 3 abgespeichert. Bei diesem Beispiel ist angenommen, daß als Webmuster eine sogenannten Köperbindung vorliegt, bei welcher sich das Webmuster nach drei Webzyklen wiederholt, d.h. nach dreimal 360° (insgesamt 1080°) der Hauptantriebswelle. Zu den in Schritten von 1° folgenden Winkelpositionen wird jeweils das gewünschte Drehmoment TT in dem Speicher 15 der Steuereinheit abgespeichert, d.h. für die Winkelstellungen P 1 bis P 1080 die zu liefernden Drehmomente TT 1 bis TT 1080.

In diesem Fall wird mittels des Sensors 32 die Ist-Winkelposition des Antriebsmotors 2 erfaßt. Zu dieser Ist-Winkelposition wird dann das abzugebende oder zu liefernde Drehmoment TT aufgerufen. Liegt beispielsweise als Ist-Winkelstellung P 400 vor, so beträgt das zu lieferende Drehmoment TT 400. Die Steuerdaten, die für das zu liefernde Drehmoment TT 400 gelten, werden unter Verwendung der Tabelle nach Fig. 2 bestimmt. Es wird die Ist-Drehzahl des Antriebsmotors 2 erfaßt. Ferner wird geprüft, welcher Wert T der Tabelle 2 dem zur Position P 400 geforderten Wert TT 400 des abzugebenden Drehmomentes entspricht. Beispielsweise kann angenommen werden, daß die Ist-Drehzahl den Wert W 6 aufweist und der Wert TT 400 dem Drehmoment T 50 gleich ist. In diesem Fall ergeben sich wieder die Steuerdaten für die Amplitude mit A 4906 und für die Frequenz mit F 4906. Entsprechend wird zu jeder anderen abgespeicherten Winkelposition P vorgegangen. Beispielsweise ist bei der Winkelposition P 1070 ein zu lieferndes Drehmoment TT 1070 abgespeichert, das dem Drehmoment T 100 entspricht. Wenn dann bei der Winkelposition P 1070 als Ist-Drehzahl W 5 erfaßt wird, so wird der Antriebsmotor 2 mit den Steuerdaten gesteuert, die der Zeile W 5 und T 100 zugeordnet sind, d.h. mit den Steuerdaten A 9905 für die Amplitude und F 9905 für die Frequenz.

Der Verlauf des zu liefernden Drehmomentes kann beispielsweise eine Summe aus einem konstanten Wert und mehreren Sinusverlaufen darstellen, wobei bei einer Webmaschine die Periode, in der sich der Verlauf wiederholt, der Periode des Webmusters entspricht. Abhängig von der Anzahl der Webzyklen, die eine Periode umfaßt, und abhängig von der gewählten Schrittgröße zwischen den Winkelpositionen können eine Anzahl von Werten für das zu liefernde Drehmoment aufgenommen werden. Wenn eine Periode beispielsweise zehn Webzyklen umfaßt und pro 5° der Winkelstellung ein anderer Wert für das zu liefernde Drehmoment TT eingestellt wird, umfaßt die Tabelle (ähnlich zu Fig. 3) beispielsweise zwei Spalten mit 720 Werten.

Bei einer Webmaschine ist es vorteilhaft, mehrere periodische Verläufe für das vom Antriebsmotor 2 zu liefernde Drehmoment im Abhängigkeit von der Winkelposition des Antriebsmotors 2 und/oder auch mehrere konstante Werte für das zu liefernde Drehmoment in dem Speicher 15 der Steuereinheit 1 abzulegen. Ein Beispiel hierfür ist in der Tabelle nach Fig. 4 dargestellt. Es sind mehrere Verläufe TA bis TD für das zu liefernde Drehmoment jeweils mit Werten TA 1 bis TA 1080, TB 1 bis TB 1080, TC 1 bis TC 1080 und TD 1 bis TD 1080 und mehrere konstante Werte TE bis TG für das zu liefernde Drehmoment angegeben. An der Eingabeeinheit 31 kann einer dieser periodischen Verläufe TA bis TD und/oder der konstanten Werte TE ibs TG ausgewählt werden, nach welchen der Antriebsmotor 2 gesteuert wird. Auf diese Weise kann für jedes zu webende Gewebe ein geeignetes Drehmoment gewählt werden, das einen konstanten Wert und/oder einen wählbaren Verlauf aufweist.

Geeignete Verläufe für das zu lieferende Drehmoment können experimentell bestimmt werden. Danach kann dann ebenfalls experimentell bestimmt werden, welcher Verlauf bei den gegebenen Webparametern die beste Webqualität ergibt. Anzumerken ist noch, daß auch das Vorgeben eines kontanten Wertes für das zu liefernde Drehmoment als die Vorgabe eines Verlaufes bezeichnet werden kann, d.h. eines konstanten Verlaufes.

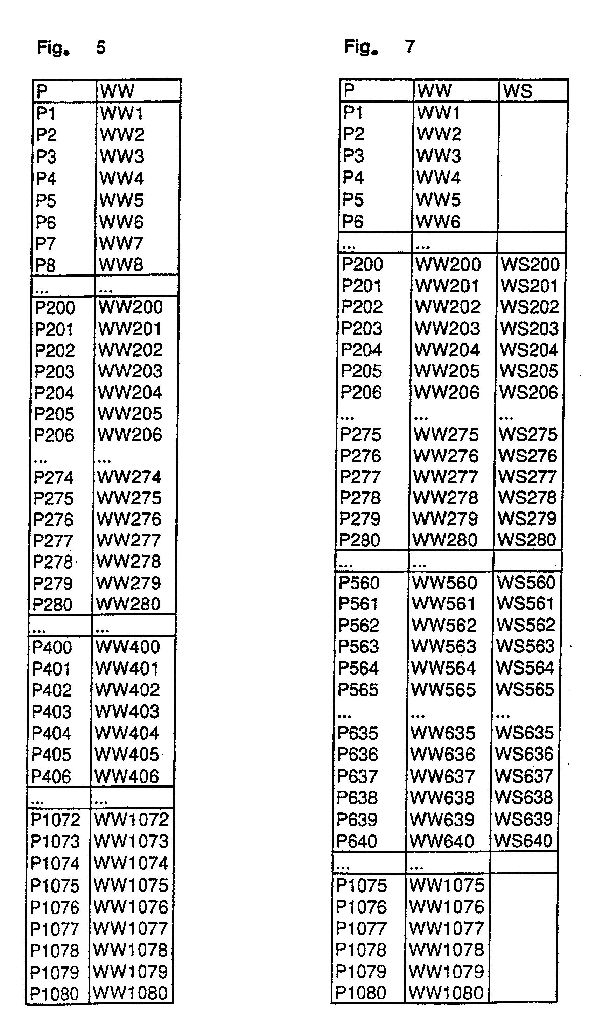

Wie schon erwähnt wurde, wird die Ist-Drehzahl des Antriebsmotors 2 erfaßt. Wie das in Fig. 5 dargestellt ist, wird diese Ist-Drehzahl WW über die Winkelposition P des Antriebsmotors 2 auch in dem Speicher 15 der Steuereinheit abgespeichert. Die Ist-Drehzahl WW ändert sich ebenfalls mit einer Periode, die dem zu webenden Webmuster entspricht. In der Tabelle 5 sind pro Winkelgrad Winkelpositionen P 1 bis 1080 angeführt, zu welchen die entsprechenden Ist-Drehzahlen WW 1 bis WW 1080 abgespeichert sind.

Der abgespeicherte Verlauf der Drehzahl kann beispielsweise vorteilhaft dazu benutzt werden, der Maschine eine durchschnittliche Arbeitsgeschwindigkeit vorzugeben, d.h. eine Durchschnittsdrehzahl für den Antriebsmotor 2. Die durchschnittliche Drehzahl des Antriebsmotors 2 wird beispielsweise dadurch bestimmt, daß der Mittelwert des gespeicherten Verlaufs der Ist-Drehzahlen WW (Fig. 5) gebildet wird. Dieser Mittelwert wird ebenfalls abgespeichert. Wenn der jeweils erfaßte Ist-Wert für die durchschnittliche Drehzahl zu niedrig oder zu hoch liegt, wird das von dem Antriebsmotor 2 der Maschine zu liefernde Drehmoment entsprechend verändert.

Gemäß einer Möglichkeit wird - wenn beispielsweise der Wert der durchschnittlichen Drehzahl 10 % zu niedrig oder zu hoch liegt - von der Verarbeitungseinheit 16 das im Speicher 15 der Steuereinheit gespeicherte zu liefernde Drehmoment um 10 % erhöht oder erniedrigt. Wenn danach die durchschnittliche Drehzahl immer noch zu hoch oder zu niedrig ist, kann in entsprechender Weise mit mehreren Schritten das Einstellen der durchschnittlichen Drehzahl wiederholt werden, bis der Ist-Wert für die durchschnittliche Drehzahl mit dem gewünschten Wert übereinstimmt.

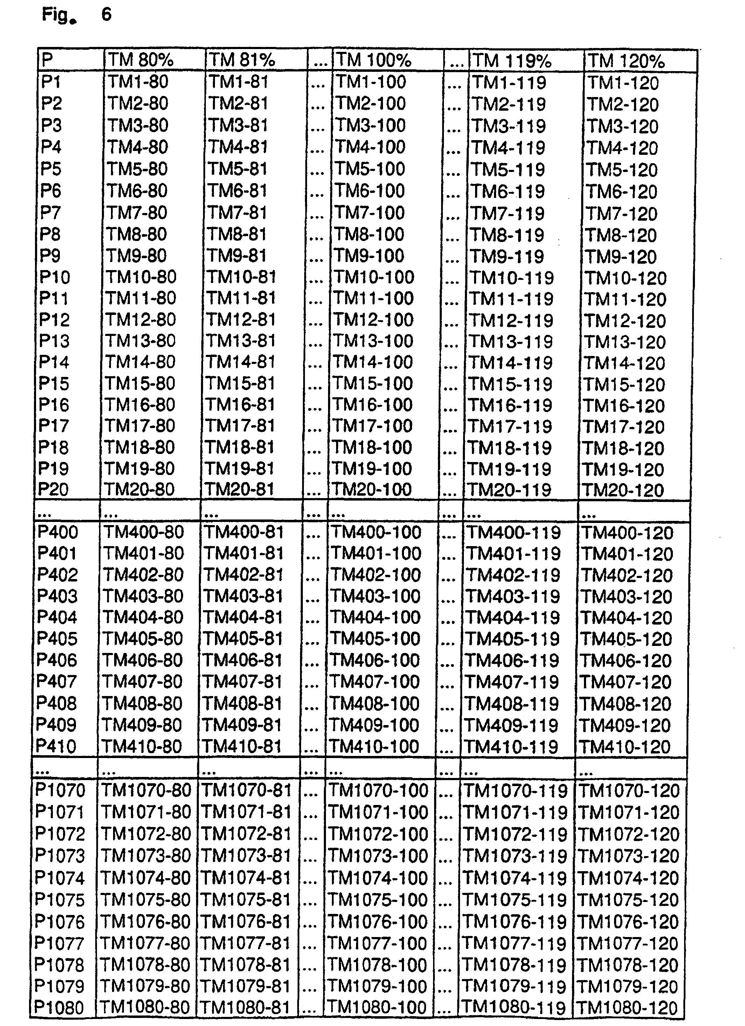

Bei einer anderen Lösung werden mehrere Spalten für das zu liefernde Drehmoment im Speicher 15 der Steuereinheit 1 abgespeichert, die in einem vorgegebenen Verhältnis zueinander stehen. Wie beispielsweise in Fig. 6 dargestellt ist, befindet sich in einer Spalte das Drehmoment TM 100 %, das dem normalen Verlauf des zu liefernden Drehmomentes entspricht. Beispielsweise kann TM 100 % den Werten des Verlaufs TB des Drehmomentes der Tabelle 4 entsprechen. In der Spalte TM 80 % sind die Werte abgespeichert, die 80 % von TM 100 % betragen. Entsprechend sind in der Spalte TM 120 % die Werte eingetragen, die 120 % der Werte von TM 100 % entsprechen. In entsprechender Weise sind weitere Spalten mit Werten zwischen TM 80 % und TM 120 % vorgesehen. Wenn die Maschine mit einer Steuerung mit den Werten TM 100 % für das zu liefernde Drehmoment betrieben wird und festgestellt wird, daß die durchschnittliche Drehzahl 10 % zu niedrig oder zu hoch ist, so wählt die Steuerung die Werte TM 110 % oder TM 90 %. Dieses Vorgehen kann gleichfalls mehrere Male hintereinander wiederholt werden, bis der Ist-Wert der durchschnittlichen Drehzahl mit dem gewählten Wert für die durchschnittliche Drehzahl übereinstimmt. Auf diese Weise ist es möglich, die Webmaschine unabhängig von Umgebungseinflüssen (beispielsweise der Temperatur) mit einer gewünschten durchschnittlichen Drehzahl oder Drehgeschwindigkeit anzutreiben.

Es versteht sich von selbst, daß Verläufe TM 80 % bis TM 120 % auch für die Verläufe TA, TC bis TG nach Fig. 4 erstellt werden können. Diese Verläufe müssen sich nicht immer um ein volles % unterscheiden. Sie können sich beispielsweise auch um Bruchteile von Prozenten unterscheiden. Ebenso können selbstverständlich auch andere Prozentsätze für Verläufe vorgesehen werden.

Der festgestellte Verlauf der Drehzahl des Antriebsmotors 2, die sich aufgrund der Steuerung des abgegebenen Drehmomentes der Maschine ergibt, und die ebenfalls einen periodischen Verlauf hat, wird auch beim Starten oder Anfahren der Maschine benutzt. Dieser Verlauf der Drehzahl über die Winkelposition des Antriebsmotors, die in Fig. 5 dargestellt ist, ist in dem Speicher 15 der Steuereinheit 1 abgelegt. Während des Anlaufens des Antriebsmotors 2 wird die Ist-Winkelposition des Antriebsmotors bestimmt, d.h, die Startposition als auch die Winkelpositionen des Antriebsmotors 2 kurz nach dem Start. Ebenso werden beim Starten des Antriebsmotors 2 die Ist-Drehzahlen zu jeder Ist-Winkelstellung des Antriebsmotors 2 erfaßt. Der Antriebsmotor 2 wird beim Starten mittels Steuerdaten gesteuert, die so ausgewählt werden, daß der Antriebsmotor mit einem Ist-Verlauf der Drehzahl gestartet wird, die mit dem gespeicherten periodischen Verlauf der Drehzahl WW übereinstimmt, die in Fig. 5 dargestellt ist.

Dabei wird beispielsweise wie folgt vorgegangen. Wenn der Ist-Wert der Drehzahl kleiner als der zu dieser Winkelposition gespeicherte Wert der Drehzahl ist, werden die Steuerdaten in Abhängigkeit von den Unterschieden so angepaßt, daß erreicht wird, daß der Ist-Wert der Drehgeschwindigkeit möglichst gleich dem Wert der zu der Ist-Winkelposition gespeicherten Drehzahl wird oder der Unterschied zu null wird. Dies kann geschehen, indem beispielsweise die Steuerdaten für die Amplitude des Speisestroms in Abhängigkeit von der festgestellten Differenz erhöht werden. Wenn der Ist-Wert der Drehzahl größer ist, wird beispielsweise die Amplitude des Speisestroms in entsprechender Weise verringert. Dies ist im Prinzip eine bekannte Regelung mit Rückkopplung der Drehzahl eines Antriebsmotors. Die Steuerdaten des Antriebsmotors 2 werden so ausgewählt, daß der Antriebsmotor 2 derart anläuft, daß kurz nach dem Start die Ist-Drehzahl des Antriebsmotors mit den abgespeicherten, vorgegebenen Drehzahlen des Antriebsmotors 2 übereinstimmen.

Da der Antriebsmotor 2 unmittelbar nach dem Start eine deutliche niedrigere Ist-Drehzahl als die gespeicherte Drehzahl hat, wird der Antriebsmotor beim Start kurzzeitig hoch belastet. Nach kurzer Zeit wird der Antriebsmotor 2 jedoch mit einer Drehzahl laufen, die im wesentlichen dem abgespeicherten Verlauf der Drehzahl entspricht. Ein großer Vorteil besteht darin, daß der auf diese Weise entsprechende drehzahlgesteuerte Antriebsmotor dabei auch ein Drehmoment liefert, dessen Verlauf im wesentlichen dem Verlauf und/oder dem konstanten Wert für das Drehmoment entspricht, mit welchem der Antriebsmotor vor dem Stillstand gesteuert wurde. Bei Webmaschinen ist das nicht nur vorteilhaft, um den Antriebsmotor 2 mit einem guten energetischen Wirkungsgrad anzutreiben, sondern auch weil - unmittelbar nach dem Start - in gleicher Weise ein Gewebe hergestellt wird, als wäre die Maschine nicht angehalten worden.

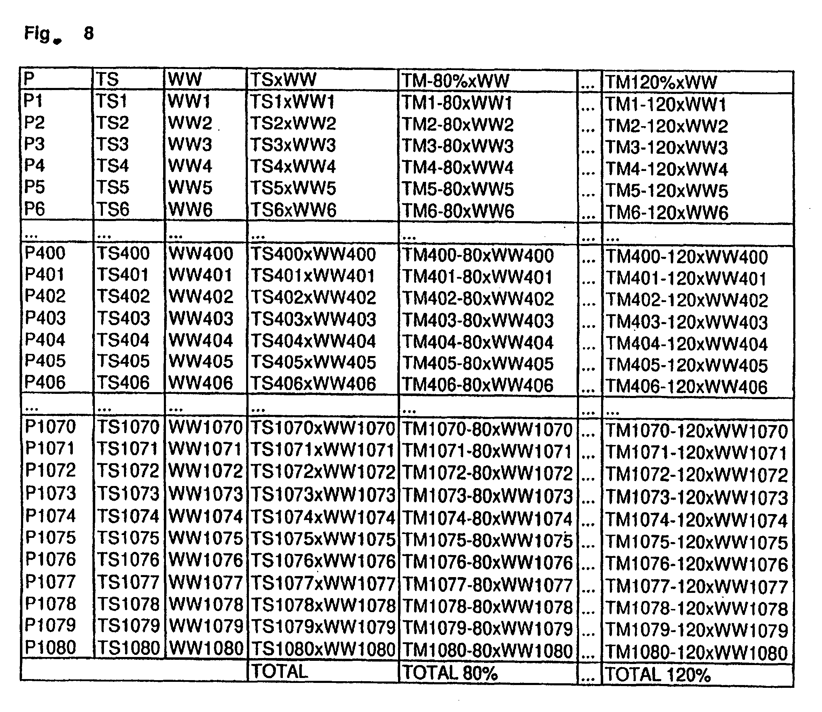

Um den Antriebsmotor 2 und das Steuerungssystem 17 unmittelbar nach dem Start weniger hoch zu belasten, kann das Verfahren abgewandelt werden. Zunächst wird ein Startverlauf für den Antriebsmotor 2 bestimmt. Bei einer Webmaschine wird für jeden Webzyklus ein solcher Startverlauf festgelegt werden, da eine Webmaschine in jedem Webzyklus angehalten werden kann und entsprechend wieder gestartet werden muß. Bei dem dargestellten Beispiel, bei dem ein Webmuster drei Webzylken umfaßt, werden drei Startverläufe festgelegt. Ein erster Startverlauf, der zu dem Starten der Webmaschine im ersten Webzyklus gehört, ist in der Tabelle nach Fig. 7 dargestellt. Er enthält Werte WS 200 bis WS 280 für die Drehzahl des Antriebsmotors 2, die Winkelpositionen P 200 bis P 280 zugeordnet sind. Aus Gründen der Deutlichkeit werden in Fig. 7 auch die Werte des Verlaufs der Drehzahl WW nach Fig. 5 wiederholt. Der Wert WS 200 des Startverlaufs für die Drehzahl muß nicht gleich null sein. Er kann beispielsweise einen Wert haben, der zwischen null und dem Wert WW 200 der Tabelle nach Fig. 7 liegt. Die Werte WS für den Startverlauf nähern sich der Drehzahl WW, wobei der Wert WS 280 praktisch gleich dem Wert WW 280 ist.

Der Antriebsmotor 2 wird somit so gesteuert, daß er nach dem Start im Bereich von der Winkelposition P 200 bis zu der Winkelposition P 280 die Drehzahlen WS 200 bis WS 280 erreicht. Ab der Winkelstellung P 281 wird der Antriebsmotor 2 dann nach den gespeicherten Drehzahlen WW 281 usw. gesteuert.

Da eine Webmaschine in jedem Webzyklus eines Webmusters angehalten und entsprechend wieder gestartet werden kann, werden ebenso viele Startverläufe vorgesehen, wie unterschiedliche Webzyklen im Webmuster enthalten sind. In der Tabelle nach Fig. 7 ist deshalb noch ein zweiter Startverlauf zwischen den Winkelpositionen P 560 und P 640 dargestellt, der dem zweiten Webzyklus zugeordnet ist. Entsprechend kann noch ein Startverlauf zwischen den Winkelpositionen P 940 und P 1020 vorgesehen werden. Der Antriebsmotor 2 wird nach Erreichen der Winkelposition P 280, P 640 und P 1020, zu denen jeweils ein Startverlauf endet, entsprechend dem abgespeicherten Verlauf der Drehzahl WW gesteuert, d.h. ab den Winkelpositionen P 281, P 641 und P 1021, die in Fig. 5 und 7 dargestellt sind.

Selbstverständlich muß der Unterschied der Winkelpositionen zwischen den Anfangspositionen und den Endpositionen der Startverläufe von aufeinanderfolgenden Webzyklen nicht immer 360° betragen. Ebenso muß der Unterschied zwischen der Anfangswinkelposition und der Endwinkelposition eines Startverlaufes auch nicht 80° betragen.

Das Verfahren zum Starten der Maschine ermöglicht einen schnellen Start, und zwar einen Start mit einem Verlauf der Drehzahl, der schon nach sehr kurzer Zeit dem Verlauf der Drehzahl entspricht, der auch dann erreicht wird, wenn der Antriebsmotor entsprechend einem zu lieferenden Drehmoment gesteuert wird. Dieser Verlauf der Drehzahl ist in Fig. 5 und 7 dargestellt. Danach wird die Steuerung von dem Steuern nach dem Verlauf der Drehzahl wieder umgeschaltet auf die Steuerung nach dem von dem Antriebsmotor 2 zu liefernden Drehmoment. Damit ein sanfter Übergang erfolgt, kann das folgende Verfahren angewandt werden.

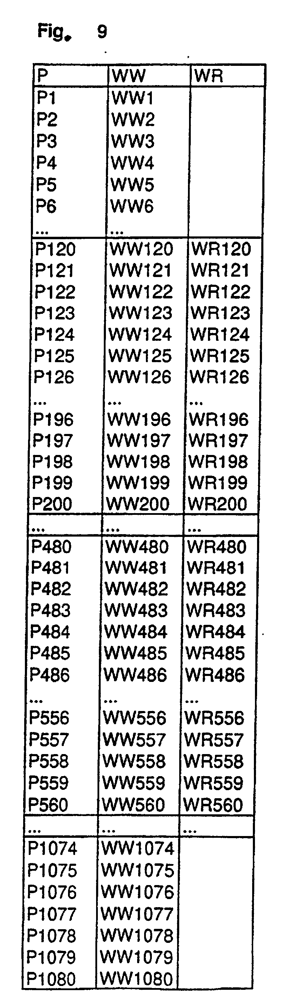

Die Ist-Werte TS des Drehmomentes werden anhand der Tabelle nach Fig. 2 zu jeder Winkelposition des Antriebsmotors erfaßt und abgespeichert, wenn dieser mittels Steuerdaten nach einem Verlauf der Drehzahl gesteuert wird. Die Ist-Werte TS 1 bis TS 1080 werden in einem Speicher 15 der Steuereinheit 1 für die Winkelpositionen P 1 bis P 1080 abgespeichert (Fig. 8). Die dabei jeweils verwendeten Steuerdaten, mit denen der Antriebsmotor betrieben wird, sind selbstverständlich ebenfalls bekannt.

Es wird angestrebt, daß das Umschalten von der Steuerung nach dem Verlauf der Drehzahl des Antriebsmotors auf die Steuerung nach dem von dem Antriebsmotor zu liefernden Drehmoment so vorgenommen wird, daß dabei die durchschnittliche Drehzahl des Antriebsmotors 2 praktisch konstant bleibt. Hierzu werden beispielsweise die Tabellen nach Fig. 6 und 8 verwendet. Die Tabelle nach Fig. 8 enthält für die Winkelpositionen P 1 bis P 1080 die Ist-Werte der Drehzahl WW aus Fig. 5. Für jede Winkelposition wird dann das Produkt der Ist-Werte TS des Drehmomentes und der Ist-Werte der Drehgeschwindigkeit gebildet und in eine Spalte aufgenommen. Daraus wird die Summe dieser Spalte als TOTAL errechnet. Diese Summe ist ein Maß für die der Maschine zugeführte Energie. Des weiteren werden für jede Winkelposition die Produkte der Ist-Werte WW der Drehzahl und der Werte für die Momente T 80 % bis T 120 % (Tabelle nach Fig. 6) gebildet und in Spalten der Tabelle nach Fig. 8 aufgenommen. Für diese Spalten wird jeweils die Summe gebildet, d.h. die Summe TOTAL 80 % bis TOTAL 120 %. Diese Summen TOTAL 80 % bis TOTAL 120 % werden mit der Gesamtsumme TOTAL verglichen. Die Spalte, deren Summe TOTAL mit der Gesamtsumme TOTAL gleich ist, beispielsweise die Spalte TM 102 %, ermöglicht es, bei einer Steuerung nach dem Verlauf des Drehmomentes TM 102 % gleich viel Energie an die Maschine zu liefern, wie der Antriebsmotor 2, wenn er nach dem Verlauf der Drehzahl WW (Tabelle nach Fig. 5) gesteuert wird und das Drehmoment TS liefert. Bei einer Umschaltung von der einen Steuerungsart auf die andere wird deshalb der Antriebsmotor 2 näherungsweise mit der gleichen durchschnittlichen Drehzahl betrieben. Gemäß einer anderen Lösung wird die Spalte mit dem Verlauf des Momentes TM 80 % bis TM 120 % gewählt, die denselben Mittelwert für das Drehmoment aufweist, wie dies Spalte mit dem Ist-Wert TS des Drehmomentes. Dies ist zwar weniger genau, da jedoch das Ist-Moment TS nur relativ gering von dem Drehmoment abweicht, mit dem der Antriebsmotor 2 vor dem Anhalten gesteuert wurde, hat das wenig Einfluß auf die durchschnittliche Drehzahl. Es ist auch möglich - wenn der Ist-Wert der durchschnittlichen Drehzahl etwas von dem gewünschten Wert der durchschnittlichen Drehzahl abweicht - ein geeignetes Drehmoment zwischen TM 80 % und TM 120 % für die Steuerung des Antriebsmotors 2 zu wählen, wie dies anhand von Fig. 6 erläutert wurde.

Um die Maschine anzuhalten oder abzuschalten, wird die Steuerung auf einen Anhalteverlauf umgeschaltet. Bei einer Webmaschine wird für jeden Webzylkus ein entsprechender Anhalteverlauf bestimmt. Bei dem dargestellten Ausführungsbeispiel wird ein Anhalteverlauf für den Antriebsmotor 2 festgelegt, der vorgegebene Drehzahlwerte WR aufweist, die jeweils Winkelpositionen zugeordnet sind. Beispielsweise sind Drehzahlwerte WR 120 bis WR 200 vorgesehen, die den Winkelpositionen P 120 bis P 200 zugeordnet sind. Diese Werte WR, die auch für die anderen Webzyklen vorgesehen sind, sind in der Tabelle nach Fig. 9 neben den Ist-Werten WW der Drehzahl gemäß Tabelle aus Fig. 5 für die betreffenden Winkelpositionen P abgelegt. Dabei endet der Wert WR der Drehzahl mit null bei einer Winkelposition P 200 des Antriebsmotors, bei welcher der Antriebsmotor 2 stillgesetzt sein muß. Hier ist anzumerken, daß diese Winkelposition P 200 auch die Winkelposition ist, bei welcher der Antriebsmotor 2 - beispielsweise entsprechend Fig. 7 - gestartet wird. Beim Anhalten des Antriebsmotors 2 werden die Ist-Werte der Winkelposition P des Antriebsmotors bestimmt. Der Antriebsmotor 2 wird mittels Steuerdaten (Amplitude und Frequenz des Stroms) so gesteuert, daß bei jeder Winkelposition die zugehörige Drehzahl WR gemäß dem Anhalteverlauf erhalten wird. Dies kann in ähnlicher Weise wie bei dem Startverlauf erfolgen, indem die Amplitude und die Frequenz des Speisestroms in Abhängigkeit von der Differenz zwischen dem Ist-Wert der Drehzahl und der gewünschten Drehzahl des Anhalteverlaufes so eingestellt werden, daß der Antriebsmotor 2 die Maschine in der gewünschten Weise bremst.

In zweckmäßiger Ausgestaltung wird vorgesehen, daß in dem Anhalteverlauf Werte WR für die Drehzahl des Antriebsmotors in Relation zu der Winkelposition P des Antriebsmotors vorgegeben werden, die an die Werte der Drehzahl WW des Antriebsmotors 2 anschließen, wie diese in den Tabellen nach Fig. 5 oder 9 angegeben sind. Der Wert WR 120 des Anhalteverlaufes ist dabei gleich dem Wert WW 120 der Drehzahl, wenn der Antriebsmotor 2 nach einem Verlauf des Drehmomentes und/oder nach einem kontanten Drehmoment gesteuert wird. Die Werte WR werden bis zu dem Wert null bei dem Wert WR 200 für die Drehzahl reduziert, da der Antriebsmotor 2 in der Winkelposition P 200 stillstehen soll.

Da eine Webmaschine innerhalb von jedem Webzyklus eines Webmusters angehalten werden kann, werden gleich viele Anhalteverläufe vorgesehen, wie Webzyklen im Webmuster enthalten sind. In der Tabelle nach Fig. 9 werden Anhalteverläufe zwischen den Winkelpositionen P 120 und P 200, P 480 und P 560 sowie auch zwischen P 840 und P 920 vorgesehen. Der jeweilige Unterschied zwischen den Winkelstellungen zu Beginn und zum Ende der Anhalteverläufe muß natürlich nicht immer 360° betragen. Entsprechend muß der Unterschied zwischen dem Beginn des Anhalteverlaufs und dem Ende des Anhalteverlaufs nicht 80° betragen.

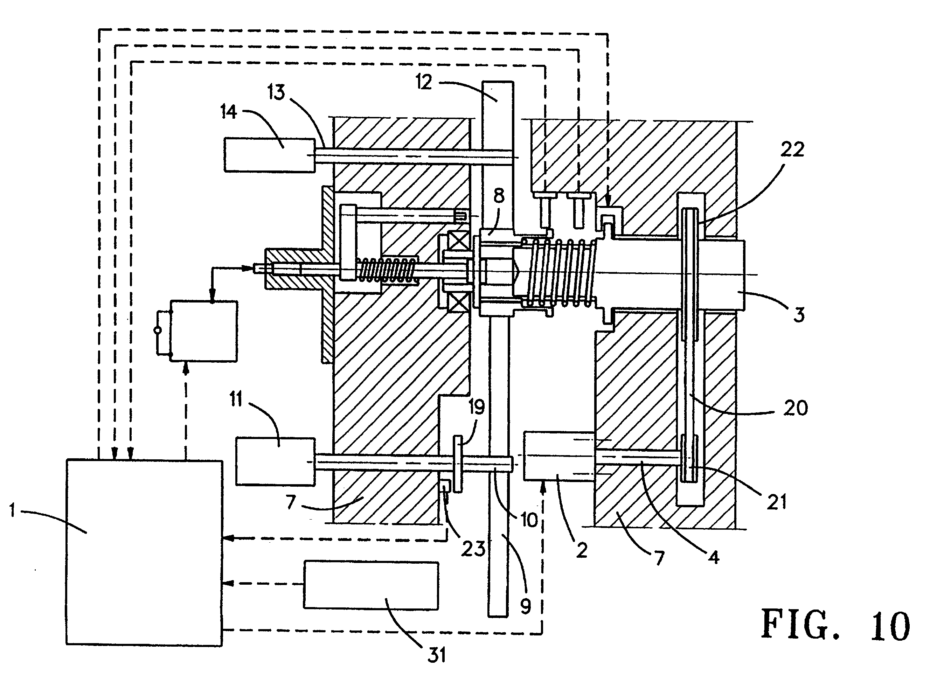

Die erfindungsgemäßen Steuerungen können bei jeder beliebigen Maschine angewandt werden, die ein oder mehrere Bauteile aufweisen, die eine periodische Bewegung ausführen, so daß sich aufgrund des Trägheitsmomentes periodisch ändernde Maschinengeschwindigkeiten ergeben. In Fig. 10 ist eine Ausführungsform dargestellt, bei welcher der Antriebsmotor 2 mittels eines Riemenantriebes aus Riemen 20 und Riemenscheiben 21, 22 eine Webmaschine antreibt. Diese Ausführungsform ist beispielsweise identisch mit Fig. 9 des US-Patentes 5,617,901. Die Antriebswelle 4 des Antriebsmotors 2 und die Hauptantriebswelle 3 der Webmaschine sind nicht einteilig. Die Drehzahl und/oder die Winkelposition des Antriebsmotors 2 werden nicht direkt an diesem Antriebsmotor, sondern an einer Antriebswelle 10 der angetriebenen Webmaschine erfaßt, die mit der Motorwelle 4 des Antriebsmotors 2 gekoppelt ist. Dabei wird eine Encoderscheibe 19 eingesetzt, die drehfest auf der Antriebswelle 10 angeordnet ist und die beispielsweise der Encoderscheibe 33 entspricht und die mit einem Sensor 23 zusammenarbeitet, der an eine Steuereinheit 1 angeschlossen ist. Der Sensor 23 entspricht beispielsweise dem Sensor 32 der Fig. 1. Um aus den Signalen des Sensors 23 die Drehzahl und/oder die Winkelposition des Antriebsmotors 2 zu bilden, muß das Übersetzungsverhältnis zwischen der Motorwelle 4 und der Antriebswelle 10 berücksichtigt werden.

Die Werte für die Winkelposition und/oder die Drehzahl des Antriebsmotors 2, die in den Tabellen nach Fig. 2 bis 9 angegeben sind, müssen nicht notwendigerweise die absoluten Werte der Winkelposition und/oder der Drehzahl sein. Es können vielmehr auch Werte verwendet werden, die proportional zu den genannten Absolutwerten sind. Dies wird beispielsweise dann bevorzugt, wenn der Sensor 23 auf der Antriebswelle 10 der anzutreibenden Maschine angebracht ist, die mit einem bestimmten Übersetzungsverhältnis von der Motorwelle 4 angetrieben ist. Die Tabellen nach Fig. 2 bis 9 können dann Werte enthalten, die proportional zu den Absolutwerten sind, wobei der Proportionalitätsfaktor in Abhängigkeit von dem Übersetzungsverhältnis bestimmt ist. Die Auswerteeinheit 16 kann in einfacher Weise diesen Proportionalitätsfaktor berücksichtigen, damit der Antriebsmotor 2 entsprechend während des Normalbetriebs gesteuert und/oder gestartet und/oder angehalten werden kann.

Die Steuerung des Antriebsmotors 2 entsprechend einem vorgegebenen Drehmoment ist vorteilhaft für den energetischen Wirkungsgrad. Das Drehmoment, das der Antriebsmotor 2 liefert, wird nicht mit Sensoren gemessen, sondern von der Steuereinheit 1 gesteuert. Wenn eine Störung in der angetriebenen Maschine auftritt, beispielsweise wenn sich das Zahnrad 9 von der Antriebswelle 10 löst und die Antriebselemente 11 nicht mehr angetrieben werden, hätte das zur Folge, daß der Antriebsmotor 2 weniger belastet wird und dann eine sehr hohe Drehzahl erreicht. Um dies zu verhindern, enthält die Auswerteeinrichtung 16 der Steuereinheit Mittel, die die Steuerung des Antriebsmotors 2 unterbrechen oder den Antriebsmotor 2 anhalten, wenn eine zu hohe Drehzahl festgestellt wird. Es kann auch geschehen, daß sich die durchschnittliche Drehzahl des Antriebsmotors 2 plötzlich stark verändert. Dies kann beispielsweise dadurch geschehen, daß eines der Lager 5, 6 der angetriebenen Maschine festgefressen ist. Auch in diesem Fall sollte ein Abschalten vorgenommen werden. Selbstverständlich können noch weitere Sicherheitsvorkehrungen getroffen werden. Beispielsweie kann die Auswerteeinheit 16 - wenn über die Eingabeeinheit 31 ein zu hoher Wert für das zu liefernde Drehmoment eingegeben wird - an der Anzeigeeinheit 18 eine Fehlermeldung ausgeben.

Das Steuerungssystem 17 ist nicht notwendigerweise getrennt von der Steuereinheit 1. Es kann vielmehr auch Teil der Steuereinheit 1 selbst sein. Bei einer anderen Ausführungsform können aber auch Speicher 15, Auswerteeinheiten 16 und das Steuerungssystem 17 separate Einrichtungen sein.

Die erfindungsgemäße Steuerung kann auch angewandt werden, wenn zwischen dem Antriebsmotor 2 und der anzutreibenden Maschine eine schaltbare Kupplung vorhanden ist. Dabei darf allerdings für die Erfassung der Winkelposition des Antriebsmotors nicht der absolute Wert der Winkelposition des Antriebsmotors gewählt werden. Vielmehr muß eine relative Winkelposition in Abhängigkeit von der Winkelposition der Antriebswelle der anzutreibenden Maschine bestimmt werden. Wenn beispielsweise bei der Ausführungsform nach Fig. 1 zwischen der Hauptantriebswelle 3 der Maschine und der Motorwelle 4 eine Kupplung angeordnet ist, mit der die Antriebswelle 3 die Motorwelle 4 in verschiedenen Winkelstellungen miteinander gekoppelt werden können, so kann der Sensor 32 mit der Encoderscheibe 33 auf der Antriebswelle 3 der anzutreibenden Maschinen montiert werden.

## Patentansprüche

1. Verfahren zum Antreiben einer Maschine, die wenigstens ein eine periodische Bewegung ausführendes Bauteil enthält, durch Steuern eines elektrischen Antriebsmotors (2), **dadurch gekennzeichnet, dass** Steuerdaten für den Antriebsmotor (2) ermittelt und gespeichert werden, die bei jeder von einer Vielzahl von Drehzahlen des Antriebsmotors (2) einer Vielzahl von vorbestimmten, unterschiedlichen, von dem Antriebsmotor abgebbaren Drehmomenten entsprechen, Messen der Ist-Drehzahl des Antriebsmotors (2) und Abrufen der gespeicherten Steuerdaten, die bei der gemessenen Ist-Drehzahl einem vorgegebenen, zu liefernden Drehmoment entsprechen.

2. Verfahren nach Anspruch 1 **dadurch gekennzeichnet, daß** das zu liefernde Drehmoment als ein konstanter Wert vorgegeben wird.

3. Verfahren nach Anspruch 1 **dadurch gekennzeichnet, daß** das von dem Antriebsmotor (2) zu liefernde Drehmoment als Verlauf über die Winkelposition des Antriebsmotors abgespeichert wird, daß die Ist-Winkelposition des Antriebsmotors erfaßt wird, und daß der zu der Ist-Winkelposition aus dem Speicher ausgelesene Wert des Drehmomentes als zu lieferndes Drehmoment vorgegeben wird.

4. Verfahren nach Anspruch 2 oder 3, **dadurch gekennzeichnet, daß** mehrere Verläufe von zu liefernden Drehmomenten über die Winkelposition des Antriebsmotors (2) und/oder mehrere konstante Werte für das zu liefernde Drehmoment abgespeichert sind.

5. Verfahren nach einem der Ansprüche 1 bis 4, **dadurch gekennzeichnet, daß** der Verlauf der Drehzahl des Antriebsmotore (2), dessen Drehmoment gesteuert wird, in Abhängigkeit von der Winkelposition des Antriebsmotors (2) gemessen und abgespeichert wird.

6. Verfahren nach Anspruch 5, **dadurch gekennzeichnet, daß** aus der gemessenen Drehzahl des Antriebsmotors eine Ist-Durchschnittsdrehzahl gebildet wird, die mit einem wählbaren Wert verglichen wird, und daß bei festgestellten Abweichungen eine Angleichung der Ist-Durchschnittsdrehzahl an den gewählten Wert dadurch erfolgt, daß das von dem Antriebsmotor gelieferte Drehmoment erhöht oder reduziert wird.

7. Verfahren nach Anspruch 6, **dadurch gekennzeichnet, daß** die Maschine mittels einer Startschaltung gestartet wird, bei welcher der Antriebsmotor (2) mittels einer Drehzahlregelung auf Drehzahlen gebracht wird, die zu der jeweils gemessenen Ist-Winkelposition des Antriebsmotors (2) abgespeichert sind.

8. Verfahren nach Anspruch 7 **dadurch gekennzeichnet, daß** ein Umschalten von der Steuerung nach der Drehzahl des Antriebsmotors (2) auf die steuerung nach dem von dem Antriebsmotor (2) zu liefernden Drehmoment derart erfolgt, daß dabei die durchschnittliche Drehzahl wenigstens annähernd konstant bleibt.

9. Verfahren nach einem der Ansprüche 1 bis 8, **dadurch gekennzeichnet, daß** die Maschine mittels einer Abschaltschaltung abgeschaltet wird, bei welcher der Antriebsmotor (2) auf Drehzahlen abgebremst wird, die vorgegebenen Winkelpositionen zugeordnet sind, und daß der Antriebsmotor in einer vorgegebenen Winkelposition zum Stillstand kommt.

10. Antrieb für eine Maschine, die wenigstens ein eine periodische Bewegung ausführendes Bauteil enthält, mit einer Steuerung und einem elektrischen Antriebsmotor (2) **dadurch gekennzeichnet, dass** die Steuerung (1) mit Mitteln (15) zum Speichern von Steuerdaten, die bei jeder von einer Vielzahl von Drehzahlen des Antriebsmotors (2) eine Vielzahl von vorbestimmten, unterschiedlichen von dem Antriebsmotor (2) abgebbaren Drehmomenten entsprechen, Mittel (16, 32) zum Erfassen der Ist-Drehzahl des Antriebsmotors (2) und Mittel (16) zum Abrufen von Steuerdaten aus den Mitteln (15) zum Speichern vorgesehen sind, die die Steuerdaten abrufen, die bei der gemessenen Ist-Drehzahl das vorgegebene Drehmoment liefern.

11. Antrieb nach Anspruch 10, **dadurch gekennzeichnet, daß** die Steuerung (1) Mittel (16, 32) enthält, um die Ist-Winkelposition des Antriebsmotors (2) zu erfassen und um zu der Ist-Winkelposition Steuerdaten für den Antriebsmotor (2) aus einem Speicher (15) abzurufen, die dort in Zuordnung zu den Winkelpositionen des Antriebsmotors abgelegt sind.

12. Antrieb nach einem der Ansprüche 10 bis 11, **dadurch gekennzeichnet, daß** die Steuerung (1) Mittel (32, 15) zum Erfassen und Abspeichern der durch die Steuerung des Drehmomentes erhaltenen Drehzahl aufweist.

13. Antrieb nach einem der Ansprüche 10 bis 12 **dadurch gekennzeichnet, daß** die Steuerung (1) auf eine Startschaltung umschaltbar ist.

14. Antrieb nach einem der Ansprüche 10 bis 13, **dadurch gekennzeichnet, daß** die Steuerung (1) auf eine Abschaltschaltung umschaltbar ist.

15. Antrieb nach einem der Ansprüche 10 bis 14, **dadurch gekennzeichnet, daß** die angetriebene Maschine eine Webmaschine ist.

16. Antrieb nach einem der Ansprüche 10 bis 15, **dadurch gekennzeichnet, daß** als Antriebsmotor (2) ein schaltbarer Reluktanzmotor vorgesehen ist.

## Claims

1. Method of driving a machine containing at least one component which effects a periodic motion, by controlling an electric drive motor (2), **characterised in that** control data for the drive motor (2) is sensed and stored, that by each of a plurality of speeds of the drive motor (2) correspond to a plurality of predefined, different possible output torques of the drive motor, the actual speed of the drive motor (2) is measured and the stored control data corresponding to a pre-set torque to be applied at the measured actual speed is retrieved.

2. Method as claimed in claim 1, **characterised in that** the torque to be applied is pre-set as a constant value.

3. Method as claimed in claim 1, **characterised in that** the torque to be applied by the drive motor (2) is stored in the form of a curve correlated to the angular position of the drive motor, the actual angular position of the drive motor is sensed and the value of the torque read from the memory for the actual angular position is pre-set as the torque to be applied.

4. Method as claimed in claim 2 or 3, **characterised in that** several curves representing torques to be applied correlated to the angular position of the drive motor (2) and/or several constant values for the torque to be applied are stored in memory.

5. Method as claimed in one of claims 1 to 4, **characterised in that** the curve representing the speed of the drive motor (2) whose torque is controlled is measured and stored depending on the angular position of the drive motor (2).

6. Method as claimed in claim 5, **characterised in that** an actual average speed is derived from the measured speed of the drive motor, which is compared with a selectable value, and, if variances are detected, the actual average speed is adapted to the selected value by increasing or reducing the torque applied by the drive motor.

7. Method as claimed in claim 6, **characterised in that** the machine is started by means of a starting circuit, whereby a speed control system brings the drive motor (2) to speeds which are stored in relation to the respective measured angular position of the drive motor (2).

8. Method as claimed in claim 7, **characterised in that** the control system based on the speed of the drive motor (2) is switched to the control system based on the torque to be applied by the drive motor (2) in such a way that the average speed remains at least almost constant.

9. Method as claimed in one of claims 1 to 8, **characterised in that** the machine is shut down by a shut-down circuit, whereby the drive motor (2) is decelerated to speeds which are correlated to the pre-set angular positions and the drive motor is brought to a standstill in a pre-set angular position.

10. Drive for a machine containing at least one component which effects a periodic motion, having a control system and an electric drive motor (2), **characterised in that** the control system (1) is provided with means (15) for storing control data, that by each of a plurality of speeds of the drive motor (2) correspond to a plurality of predefined, different possible output torques of the drive motor (2), means (16, 32) for sensing the actual speed of the drive motor (2) and means (16) for retrieving control data from the storage means (15), which retrieve the control data that will deliver the torque pre-set for the measured actual speed.

11. Drive as claimed in claim 10, **characterised in that** the control system (1) contains means (16, 32) for sensing the actual angular position of the drive motor (2) and for retrieving control data for the drive motor (2) for the actual angular position from a memory (15), where it is stored in correlation with the angular positions of the drive motor.

12. Drive as claimed in one of claims 10 to 11, **characterised in that** the control system (1) has means (32, 15) for sensing and storing the speed obtained by the torque control system.

13. Drive as claimed in one of claims 10 to 12, **characterised in that** the control system (1) can be switched to a starting circuit.

14. Drive as claimed in one of claims 10 to 13, **characterised in that** the control system (1) can be switched to a shut-down circuit.

15. Drive as claimed in one of claims 10 to 14, **characterised in that** the driven machine is a weaving machine.

16. Drive as claimed in one of claims 10 to 15, **characterised in that** the drive motor (2) is a switchable reluctance motor.

## Revendications

1. Procédé d'entraînement d'une machine qui comporte au moins un composant exécutant un mouvement périodique, par la commande d'un moteur d'entraînement électrique (2), **caractérisé en ce que** des données de commande pour le moteur d'entraînement (2) sont déterminées et stockées, qui correspondent à chacun d'une multitude de vitesses de rotation du moteur d'entraînement (2) à une multitude de couples de rotation prédéterminés, différents, pouvant être émis par le moteur d'entraînement, la mesure de la vitesse de rotation réelle du moteur d'entraînement (2) et l'appel des données de commande stockées qui, à la vitesse de rotation réelle mesurée, correspondent à un couple de rotation prédéterminé à fournir.

2. Procédé selon la revendication 1, **caractérisé en ce que** le couple de rotation à fournir est prédéfini comme valeur constante.

3. Procédé selon la revendication 1, **caractérisé en ce que** le couple de rotation à fournir par le moteur d'entraînement (2) est stocké comme courbe par rapport à la position angulaire du moteur d'entraînement, **en ce que** la position angulaire réelle du moteur d'entraînement est détectée et **en ce que** la valeur du couple de rotation lue à propos de la position angulaire réelle dans la mémoire est prédéfinie comme couple de rotation à fournir.

4. Procédé selon la revendication 2 ou 3, **caractérisé en ce que** sont stockées plusieurs courbes de couples de rotation à fournir par rapport à la position angulaire du moteur d'entraînement (2) et/ou plusieurs valeurs constantes pour le couple de rotation à fournir.

5. Procédé selon l'une des revendications 1 à 4, **caractérisé en ce que** la courbe de la vitesse de rotation du moteur d'entraînement (2), dont le couple de rotation est commandé, est mesurée et stockée en fonction de la position angulaire du moteur d'entraînement (2).

6. Procédé selon la revendication 5, **caractérisé en ce qu'**il est formé à partir de la vitesse de rotation mesurée du moteur d'entraînement une vitesse de rotation moyenne réelle qui est comparée à une valeur sélective, et **en ce que**, lorsque des écarts sont constatés, une adaptation de la vitesse de rotation moyenne réelle à la valeur sélectionnée a lieu **en ce que** le couple de rotation fourni par le moteur d'entraînement est augmenté ou réduit.

7. Procédé selon la revendication 6, **caractérisé en ce que** la machine est démarrée au moyen d'une commande de démarrage, où le moteur d'entraînement (2) est amené au moyen d'un réglage de vitesse de rotation à des vitesses de rotation qui sont stockés à propos de la position angulaire réelle respectivement mesurée du moteur d'entraînement (2).

8. Procédé selon la revendication 7, **caractérisé en ce qu'**une commutation de la commande selon la vitesse de rotation du moteur d'entraînement (2) à la commande selon le couple de rotation à fournir par le moteur d'entraînement (2) a lieu de façon que, ce faisant, la vitesse de rotation moyenne reste au moins approximativement constante.

9. Procédé selon l'une des revendications 1 à 8, **caractérisé en ce que** la machine est arrêtée au moyen d'une commande d'arrêt où le moteur d'entraînement (2) est freiné à des vitesses de rotation qui sont associés à des positions angulaires prédéfinies, et **en ce que** le moteur d'entraînement s'arrête dans une position angulaire prédéfinie.

10. Système d'entraînement pour une machine qui comporte au moins un composant exécutant un mouvement périodique, avec une commande et un moteur d'entraînement électrique (2), **caractérisé en ce que** la commande (1) présente des moyens (15) pour le stockage de données de commande qui correspondent à chacun d'une multitude de vitesses de rotation du moteur d'entraînement (2) à une multitude de couples de rotation différents, prédéterminés, pouvant être émis par le moteur d'entraînement (2), des moyens (16, 32) pour détecter la vitesse de rotation réelle du moteur d'entraînement (2) et des moyens (16) pour appeler des données de commande des moyens (15) pour le stockage qui appellent des données de commande qui, lors de la vitesse de rotation réelle mesurée, foumissent le couple de rotation prédéfini.

11. Système d'entraînement selon la revendication 10, **caractérisé en ce que** la commande (1) comporte des moyens (16, 32) pour détecter la position angulaire réelle du moteur d'entraînement (2) et pour appeler à propos de la position angulaire réelle des données de commande pour le moteur d'entraînement (2) d'une mémoire (15) qui y sont stockées en étant attribuées aux positions angulaires du moteur d'entraînement.

12. Système d'entraînement selon l'une des revendications 10 à 11, **caractérisé en ce que** la commande (1) présente des moyens (32, 15) pour détecter et stocker la vitesse de rotation obtenu par la commande du couple de rotation.

13. Système d'entraînement selon l'une des revendications 10 à 12, **caractérisé en ce que** la commande (1) peut être commutée à un réglage de démarrage.

14. Système d'entraînement selon l'une des revendications 10 à 13, **caractérisé en ce que** la commande (1) peut être commutée à un réglage d'arrêt.

15. Système d'entraînement selon l'une des revendications 10 à 14, **caractérisé en ce que** la machine entraînée est une machine à tisser.

16. Système d'entraînement selon l'une des revendications 10 à 15, **caractérisé en ce que**, comme moteur d'entraînement (2), un moteur commutable à réluctance est prévu.
